# DEMANDE DE BREVET EUROPEEN

(11) **EP 0 846 709 A1**
(43) Date de publication de la demande: **10.06.1998**
(21) Numéro de dépôt: 97402855.7
(22) Date de dépôt: 27.11.1997
(51) Int. Cl.: C08F 220/54, C08F 220/22

(54) **Polymères hydrophiles fluorés**

(30) Priorité: 09.12.1996 FR 9615097
(71) Demandeur: ELF ATOCHEM S.A., 92800 Puteaux, Hauts-de-Seine (FR)
(72) Inventeur: Garcia, Gilbert, 73130 La Chambre (FR); Morillon, Elisabeth, 92400 Courbevoie (FR)

(57) **Abrégé**

Les polymères hydrophiles fluorés selon l'invention sont obtenus par polymérisation radicalaire, en milieu précipitant, d'un mélange de monomères composé d'au moins un monomère hydrophile non-ionique, d'au moins un monomère à chaîne latérale perfluoroalkyle et, éventuellement, d'un ou plusieurs monomère(s) hydrophile(s) ionique(s) ou ionisable(s).

Ces polymères sont particulièrement intéressants comme épaississants et comme additifs dans les émulseurs anti-incendies polyvalents.

## Description

La présente invention concerne le domaine des polymères hydrophiles et a plus particulièrement pour objet des polymères hydrophiles fluorés obtenus par polymérisation radicalaire en milieu précipitant de monomères hydrophiles non-ioniques, de monomères à chaîne latérale perfluoroalkyle et, éventuellement, de monomères hydrophiles ioniques ou ionisables. Ces polymères abaissent la tension superficielle des solutions aqueuses ; ce sont de bons agents moussants et ils sont plus particulièrement intéressants en tant qu'épaississants et en tant qu'additifs dans les émulseurs anti-incendies polyvalents.

Les polymères hydrophiles et plus particulièrement ceux à base d'acrylamide, de méthacrylamide ou de leurs dérivés N-substitués sont bien connus et largement utilisés industriellement. Très souvent, l'acrylamide, le méthacrylamide et leurs dérivés sont copolymérisés avec d'autres monomères hydrophiles porteurs de charges ioniques ou ionisables, anioniques ou cationiques, qui confèrent au polymère hydrophile des propriétés spécifiques adaptées à chaque application. Ces polymères sont couramment utilisés dans l'industrie papetière, dans le traitement des eaux et dans la métallurgie comme floculants de minerais; ils sont également utilisés comme agents épaississants dans de nombreuses formulations telles que l'impression textile et les produits cosmétiques.

Les méthodes les plus utilisées pour préparer ces polymères font appel aux milieux aqueux; tel est le cas de la polymérisation en solution aqueuse ou de la polymérisation micellaire, mais d'autres méthodes telles que la polymérisation en émulsion inverse sont également pratiquées. La polymérisation est généralement amorcée par un couple rédox générateur de radicaux tel que, par exemple, le couple persulfate (S₂O₈ ²⁻)/métabisulfite (S₂O₅ ²⁻), mais également par les amorceurs de radicaux azoïques ou peroxydiques. D'autres systèmes d'amorçage peuvent être utilisés tels que les rayons UV, les rayons X, les ultrasons, les sels de cobalt.

La copolymérisation de l'acrylamide, du méthacrylamide et de leurs dérivés en milieu précipitant, dans lequel les monomères sont solubles et le polymère précipite au cours de sa formation, est une méthode plus rarement utilisée et décrite notamment dans les brevets FR 1 508 702, GB 1 328 742 et US 3 336 269.

L'acrylamide, le méthacrylamide et leurs dérivés peuvent également être copolymérisés avec des monomères insolubles dans l'eau, possédant une chaîne latérale hydrocarbonée hydrophobe tels que, par exemple, les acrylates ou méthacrylates d'alcools gras. Les copolymères ainsi constitués sont des épaississants associatifs, dont les groupements hydrophobes en solution aqueuse tendent à former des associations intermoléculaires créant ainsi un réseau transitoire. En solution aqueuse, la viscosité de ces polymères associatifs dépend du taux de cisaillement; la viscosité diminue et la solution présente un caractère pseudoplastique, c'est à dire que sa viscosité décroît avec l'augmentation du taux de cisaillement. De tels produits sont décrits dans les références [1] à [3] dont la liste figure après les exemples de la présente demande.

L'acrylamide, le méthacrylamide et leurs dérivés, peuvent également être copolymérisés avec des monomères possédant une chaîne latérale hydrophobe perfluoroalkyle tels que, par exemple, les acrylates ou méthacrylates d'alcools fluorés. La synthèse et la caractérisation de tels polymères hydrophiles fluorés sont décrites par Thieo E. Hogen-Esch et ses collaborateurs et par d'autres auteurs dans les références [4] à [12]. Ces copolymères fluorés ont été préparés en milieu aqueux en présence d'un co-solvant tel que l'acétone [4] - [9], et plus rarement en milieu aqueux en l'absence de co-solvant [12] ou en masse [9], la réaction de polymérisation ayant été amorcée par un couple rédox précurseur de radicaux par oxydoréduction [4] - [9], par un amorceur radicalaire précurseur de radicaux par décomposition thermique [9] - [12] ou par le triphénylméthylcésium en polymérisation anionique en solution dans le tétrahydrofurane. Le brevet US 4 891 306 décrit des copolymères hydrophiles fluorés obtenus par polymérisation anionique ou cationique ; ces produits sont utilisés dans des matériaux photographiques sensibles à la lumière.

Dans tous les cas cités ci-dessus, les copolymères hydrophiles fluorés sont synthétisés en masse ou en milieu aqueux en présence de tensioactifs dont le but est de solubiliser à l'intérieur des micelles les monomères hydrophobes fluorés. Les tensioactifs utilisés préférentiellement sont des tensioactifs fluorés dont la chaîne latérale perfluoroalkyle est compatible avec les monomères fluorés, ce qui permet la solubilisation de ces monomères. Les polymères hydrophiles fluorés obtenus par polymérisation en milieu aqueux présentent comme caractéristique commune un poids moléculaire élevé qui conduit à des solutions aqueuses très visqueuses, d'où l'utilisation de tels produits comme agents viscosifiants. Dans beaucoup de cas, la présence de tensioactifs fluorés est gênante pour l'utilisation ultérieure des polymères, ce qui oblige à recourir à une précipitation du polymère dans un large excès de solvant, suivi d'un lavage du polymère. Cette étape de précipitation et de lavage, qui se rajoute à la synthèse, doit être réalisée avec de grandes quantités de solvants, comme par exemple les alcools, ce qui augmente le coût de fabrication et produit des effluents chargés de tensioactifs. Dans le cas de la polymérisation en milieu précipitant, utilisée dans le cadre de la présente invention, il est beaucoup plus facile et rapide de récupérer le polymère sous forme de poudre. Bien que partant de monomères de même nature que ceux décrits ci-dessus, à savoir des dérivés de l'acrylamide ou du méthacrylamide et des monomères à chaîne latérale perfluoroalkyle, les polymères hydrophiles fluorés faisant l'objet de la présente invention se différencient des précédents par plusieurs aspects, dont les principaux sont le procédé même de préparation, la teneur en monomères fluorés incorporés dans le polymère et la nature des agents amorceurs de radicaux. Ces différences se traduisent par des comportement très différents du point de vue des propriétés applicatives.

Les polymères hydrophiles fluorés selon l'invention peuvent être par exemple utilisés en tant qu'additifs dans les émulseurs anti-incendies polyvalents, c'est à dire les émulseurs destinés à l'extinction des feux d'hydrocarbures et les feux de liquides polaires.

Des émulseurs anti-incendies contenant des polymères hydrophiles fluorés ont déjà été décrits, notamment dans les brevets FR 2 438 484, US 4 563 287 et US 4 606 832. Cependant, contrairement à ce qui est indiqué dans ces brevets, il n'est pas nécessaire que la teneur en fluor dans le polymère selon l'invention soit supérieure ou égale à 10 % en poids pour constater l'influence des groupements perfluoroalkyle. En effet, les polymères hydrophiles fluorés selon l'invention présentent de très bonnes performances applicatives même si leur teneur en fluor est inférieure à 10% en poids.

D'après les indications du brevet FR 2 438 484 il n'est pas possible de former des mousses stables à la surface d'un liquide polaire si la teneur en fluor du polymère hydrophile fluoré est inférieure à 10 % en poids. Or, avec les polymères hydrophiles fluorés selon l'invention, il est possible d'obtenir des mousses stables sur liquide polaire même si la teneur en fluor du polymère est inférieure à 10 % en poids. Les performances obtenues sur liquide polaire avec les polymères hydrophiles fluorés selon l'invention, proviennent non seulement de leur composition, mais aussi de la méthode de préparation ; ces polymères doivent être préparés dans un milieu précipitant, c'est à dire dans un solvant capable de solubiliser les monomères mais dans lequel le polymère obtenu est insoluble.

L'acrylamide, le méthacrylamide et leurs dérivés N-substitués, utilisés dans le cadre de la présente invention, et la méthode de polymérisation en milieu précipitant ne sont pas mentionnés dans le brevet US 4 563 287 qui, pour l'extinction des feux d'huile de cuisine, décrit des compositions non moussantes alors que les émulseurs contenant un polymère hydrophile fluoré selon la présente invention sont des compositions moussantes.

Les compositions extinctrices décrites dans le brevet US 4 606 832, également destinées à combattre les feux d'huile de cuisine, font appel à des bromofluorohydrocarbures et/ou bromochorofluorohydrocarbures ce qui n'est pas le cas dans la présente invention, et ne sont pas des émulseurs anti-incendies ayant des propriétés moussantes comme dans le cas de la présente invention.

Le brevet FR 2 438 484 qui ne fait pas mention de l'acrylamide, du méthacrylamide ou de leurs dérivés N-substitués, indique que les polymères peuvent être obtenus par polymérisation en solution. Or, la polymérisation en solution appliquée aux polymères hydrophiles fluorés selon l'invention ne conduit pas à des produits performants ; il est nécessaire de faire appel à la polymérisation en milieu précipitant.

Compte tenu du coût élevé des monomères fluorés par rapport aux monomères hydrophiles tels que l'acrylamide, le méthacrylamide et leurs dérivés, il serait économiquement très avantageux de disposer d'un polymère hydrophile fluoré et d'une méthode pour le préparer tels que les propriétés se manifestent même lorsque le taux de fluor est faible, c'est-à-dire inférieur à 10 % en poids.

Un tel produit a maintenant été mis au point par la Demanderesse et il consiste en un polymère hydrophile fluoré, obtenu par polymérisation radicalaire en milieu précipitant d'au moins un monomère hydrophile non-ionique tel que l'acrylamide, le méthacrylamide et leurs dérivés, d'au moins un monomère à chaîne latérale perfluoroalkyle et, éventuellement, d'un ou plusieurs monomères hydrophiles ioniques ou ionisables. Un tel polymère possède des propriétés moussantes ; il abaisse la tension superficielle des solutions aqueuses et est particulièrement intéressant en tant qu'additif dans les émulseurs anti-incendies polyvalents, c'est à dire les émulseurs destinés à combattre les feux d'hydrocarbures et les feux de liquides polaires.

La méthode utilisée pour préparer ces polymères hydrophiles fluorés est la polymérisation en milieu précipitant; elle présente l'avantage de générer des polymères de faible poids moléculaire, donc des produits faiblement visqueux, de faire appel à un solvant unique qui peut facilement être régénéré et réutilisé, et de ne pas nécessiter l'emploi de tensioactifs qui pourraient gêner dans l'application et qu'il faudrait donc extraire du milieu. En fonction des conditions opératoires telles que les teneurs relatives des divers monomères, la concentration en amorceur de radicaux, la concentration initiale totale en monomères et la température de polymérisation, il est possible d'obtenir toute une gamme de polymères selon l'invention qui se différencient d'après leur poids moléculaire, leur teneur en fluor et leur taux de charges anioniques et/ou cationiques.

La présente invention a donc pour objet des polymères hydrophiles fluorés obtenus par polymérisation radicalaire, en milieu précipitant, d'un mélange de monomères composé en poids de :
***(a)*** 50 à 98 % d'au moins un monomère hydrophile non-ionique,
***(b)*** 2 à 25 % d'au moins un monomère contenant un radical perfluoroalkyle, et éventuellement
***(c)*** jusqu'à 30 % d'un ou plusieurs monomères hydrophiles ioniques ou ionisables.

Comme exemples non limitatifs de monomères hydrophiles non-ioniques (a), on peut citer :
- la N-vinyl pyrrolidone-2 et ses dérivé, tels que la N-vinyl méthyl-3 pyrrolidone-2, la N-vinyl méthyl-4 pyrrolidone-2, la N-vinyl méthyl-5 pyrrolidone-2, la N-vinyl diméthyl-3,3 pyrrolidone-2;
- l'acrylate ou méthacrylate d'éthylène glycol;
- les acrylates ou méthacrylates de polyéthylèneglycol ou d'éther de polyéthylèneglycol répondant à la formule générale :

   CH₂ = CR¹-CO(OCH₂CH₂)ₖ-OR (I)

   dans laquelle R représente un atome d'hydrogène ou un radical méthyle ou éthyle, k est un nombre entier allant de 1 à 10 et R¹ représente un atome d'hydrogène ou un radical méthyle ;
- l'acrylamide, le méthacrylamide et leurs dérivés N-substitués répondant à la formule générale suivante:

   CH₂ = CR¹―CONR²R³ (II)

   dans laquelle R¹ a la même signification que ci-dessus, les symboles R² et R³, identiques ou différents, représentent chacun un atome d'hydrogène ou un radical alkyle ou hydroxyalkyle contenant de 1 à 3 atomes de carbone.

Comme exemples non limitatifs de monomères hydrophiles de formule (II), on peut citer l'acrylamide, le N-méthyl-acrylamide, le N-éthyl-acrylamide, le N,N-diméthyl-acrylamide, le N-méthyl-N-éthyl-acrylamide, le N-hydroxyméthyl-acrylamide, le N-(3-hydroxypropyl)-acrylamide, le N-(2-hydroxyéthyl)-acrylamide, le méthacrylamide, le N-méthyl-méthacrylamide, le N-éthyl-méthacrylamide, le N,N-diméthylméthacrylamide, le N-hydroxyméthyl-méthacrylamide, le N-(3-hydroxypropyl)-méthacrylamide et le N-(2-hydroxyéthyl)-méthacrylamide.

L'acrylamide, le méthacrylamide et leurs dérivés N-substitués décrits ci-dessus seront choisis préférentiellement et plus particulièrement l'acrylamide et le méthacrylamide.

La teneur en monomères hydrophiles non-ioniques (a) dans le polymère peut aller de 50 à 98 % en poids, de préférence de 70 à 93 % en poids, et plus particulièrement de 75 à 88 % en poids.

Les monomères fluorés (b) sont des monomères comprenant un radical perfluoroalkyle, linéaire ou ramifié, contenant de 2 à 20 atomes de carbone. On choisit préférentiellement les acrylates ou méthacrylates d'alcools fluorés répondant à la formule générale suivante : 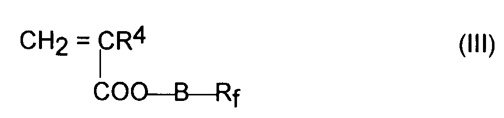 dans laquelle R_{f} représente un radical perfluoroalkyle, linéaire ou ramifié, contenant de 2 à 20, de préférence de 4 à 16 atomes de carbone, R⁴ représente un atome d'hydrogène ou un radical méthyle, B représente un enchaînement bivalent lié à O par un atome de carbone et pouvant comporter un ou plusieurs atomes d'oxygène, de soufre et/ou d'azote. On peut citer, à titre non limitatif, les acrylates ou méthacrylates des alcools fluorés répondant aux formules suivantes:

R_{f}―(CH₂)ₙ―(X)ₚ―(CH₂)ₘ―OH

R_{f}―(CH₂)ᵣ―(OCH₂CH₂)_{q}―OH

R_{f}―CH=CH―(CH₂)ₘ―OH

dans lesquelles R_{f} a la même signification que dans la formule (III), X représente un atome d'oxygène ou de soufre, ou un groupe ―COO―, ―OCO―, ―CONR⁵―, ―SO₂NR⁵―, R⁵ désignant un atome d'hydrogène ou un radical méthyle ou éthyle, n représente un nombre entier allant de 0 à 20 (de préférence égal à 0 ou 2), p est égal à 0 ou 1, les symboles m, q et r, identiques ou différents, représentent chacun un nombre entier allant de 1 à 20 (de préférence égal à 2 ou 4), n n'étant pas nul si X est un atome d'oxygène ou de soufre ou un groupe ―OCO―.

On utilise préférentiellement les acrylates ou méthacrylates des alcools fluorés répondant aux formules suivantes:

R_{f}―CH₂CH₂―OH

ou

ou R_{f}―CH₂CH₂―SO₂NR⁵―CH₂CH₂―OH

dans lesquelles R_{f} et R⁵ ont la même signification que ci-dessus.

La teneur en monomères fluorés (b) dans le polymère peut aller de 2 à 25 % en poids, de préférence de 5 à 20 % en poids, et plus particulièrement de 7 à 15 % en poids.

Comme exemples de monomères hydrophiles ioniques ou ionisables par variation du pH (c) utilisables éventuellement dans le cadre de l'invention, on peut citer à titre non limitatif :
- l'acide acrylique, l'acide méthacrylique et leurs sels de métaux alcalins ou d'ions ammonium quaternaires ;
- les dérivés mono-oléfiniques de l'acide sulfonique et leurs sels métalliques alcalins tels que, par exemple, l'éthylènesulfonate de sodium, le styrènesulfonate de sodium et l'acide 2-acrylamido-2-méthyl-propanesulfonique ;
- les halogénures de vinylpyridinium tels que, par exemple le chlorure de 4-vinylpyridinium ;
- les acrylates ou méthacrylates des aminoalcools répondant aux formules suivantes:

   HO―Y―NR⁶R⁷ ou HO―Y―N^{⊕}R⁶R⁷R⁸ , A⁻

   dans lesquelles les symboles R⁶, R⁷ et R⁸, identiques ou différents, représentent chacun un radical alkyle ou hydroxyalkyle contenant 1 à 4 atomes de carbone, Y représente un radical alkylène ou hydroxyalkylène contenant de 1 à 4 atomes de carbone, et A- est un anion monovalent quelconque ;
- les acrylates ou méthacrylates des aminoalcools cycliques tels que, par exemple, le pipéridino-2-éthanol et le (pyrrolidinyl-1)-2-éthanol.

Il est possible d'incorporer un ou plusieurs monomères hydrophiles ioniques ou ionisables par variation du pH (c); leur teneur dans le polymère peut aller de 0 à 30 % en poids, c'est-à-dire que ces monomères ne sont pas indispensables. Cependant, ayant un caractère ionique ou ionisable, ils contribuent à une meilleure solubilité dans l'eau des polymères selon l'invention et on préfère les incorporer à une teneur variant de 2 à 25 % en poids, de préférence entre 5 à 15 % en poids.

Les polymères hydrophiles fluorés selon l'invention sont préparés par polymérisation en milieu précipitant, en l'absence de tensioactif ou de tout autre agent stabilisateur.

La polymérisation en milieu précipitant conduit à une meilleure homogénéité de la longueur de chaîne du produit final, c'est-à-dire une faible polymolécularité; elle permet en outre d'accéder, suivant le choix du solvant, à des poids moléculaires beaucoup plus faibles que dans le cas de la polymérisation en solution aqueuse. Ainsi, il n'est pas nécessaire de faire appel à des agents de transfert tels que les alkyl mercaptans pour réguler la longueur des chaînes ; cet avantage peut être mis à profit si l'on veut des produits ayant des faibles poids moléculaires, donc des produits dont les solutions aqueuses sont faiblement visqueuses. L'obtention de faibles poids moléculaires pour les polymères hydrophiles fluorés permet de préparer des solutions aqueuses de faible viscosité; ce point est important pour l'utilisation des polymères dans les émulseurs anti-incendies polyvalents où, pour des raisons de mise en oeuvre, on recherche préférentiellement des faibles viscosités.

La teneur en fluor des polymères hydrophiles selon l'invention n'est pas critique. Cependant, lorsque le taux de fluor est trop élevé, la solubilité dans l'eau des polymères diminue, ce qui engendre des problèmes de mise en oeuvre. De plus, les monomères fluorés étant très coûteux par rapport aux monomères hydrophiles non fluorés, il est souhaitable d'en utiliser le moins possible tout en ayant de bonnes performances. Pour avoir un bon compromis entre le coût, la solubilité et l'efficacité, le taux de fluor peut être compris, en poids, entre 1 et 15 %, de préférence entre 2 et 10 % et plus particulièrement entre 3 et 8 %.

La réaction de polymérisation a lieu au sein d'un solvant organique dans lequel les monomères et l'amorceur radicalaire sont parfaitement solubles et dans lequel le polymère obtenu est insoluble, de sorte qu'il précipite au cours de sa formation. Le solvant de polymérisation possède préférentiellement une chaîne hydrocarbonée courte comme l'acétonitrile et les alcools inférieurs. Le choix du solvant de polymérisation dépend de la nature des monomères (a), (b) et (c); il est indispensable qu'en début de réaction tous les réactifs soient parfaitement solubles dans le solvant à une température correspondant à celle du début de la polymérisation. La concentration totale des monomères dans le solvant est avantageusement comprise entre 0,5 et 3 mole/litre, de préférence entre 1 et 2 mole/litre. Le solvant est choisi de préférence parmi les alcools inférieurs contenant de 1 à 4 atomes de carbone tels que, par exemple, le méthanol, l'éthanol, l'isopropanol ou le tertiobutanol. La réaction peut se dérouler en batch ou en coulée, les monomères (a), (b) et (c) pouvant être introduits indépendamment dans le réacteur à des moments différents.

L'amorceur radicalaire peut être un amorceur de type azoïque tel que, par exemple, l'azo-bis-isobutyronitrile ou l'acide 4,4'-azo-bis-cyanopentanoïque, ainsi que leurs dérivés possédant une chaîne latérale hydrocarbonée ou perfluoroalkylée. La préparation d'amorceurs azoïques possédant une chaîne perfluoroalkylée est décrite dans la référence [13].

L'amorceur peut aussi être de type peroxyde tel que, par exemple, le peroxy di-carbonate de dicyclohexyle, le peroxyde de benzoyle ou le peroxyde de di-tertiobutyle. Il peut s'agir également d'un perester possédant une chaîne latérale hydrocarbonée ou perfluoroalkylée. La préparation et l'utilisation d'amorceurs perfluoroalkyl peresters est décrite dans les références [14] et [15].

La concentration de l'initiateur peut varier de 0,1 à 10 % molaire par rapport au nombre total de moles de monomères, mais plus particulièrement entre 0,6 et 2 %. En fonction du type d'amorceur radicalaire utilisé et du point d'ébullition du solvant, la température de polymérisation est comprise entre 50 et 100°C, de préférence entre 70 et 90°C. La réaction peut être, par exemple, réalisée au reflux du solvant; dans ce cas, le réfrigérant condense et renvoie le solvant sous forme liquide dans le milieu réactionnel. L'addition de l'amorceur radicalaire peut être effectuée en une seule fois au début de la réaction, mais on préfère l'ajouter en plusieurs fractions ou bien en coulée car cela permet une meilleure incorporation du monomère fluoré dans le polymère. Il est préférable de mettre en oeuvre l'amorceur de radicaux déjà en solution et utiliser dans ce cas le solvant de la réaction.

En fin de réaction, le polymère hydrophile fluoré selon l'invention peut être récupéré sous forme solide par filtration. Le solvant de réaction peut aussi être retiré du milieu réactionnel par évaporation et remplacé par de l'eau de façon à obtenir le polymère selon l'invention sous forme de solution aqueuse.

Les polymères hydrophiles fluorés selon l'invention abaissent la tension superficielle des solutions aqueuses ; ils ont un bon pouvoir moussant et peuvent, par exemple, être utilisés en tant qu'additifs dans les émulseurs anti-incendies polyvalents, c'est-à-dire les émulseurs anti-incendies destinés à combattre les feux d'hydrocarbures tels que les essences, les huiles, le gazole, le fuel, l'heptane, l'hexane, le cyclohexane, ou les feux de liquides polaires tels que les alcools (par exemple le méthanol, l'éthanol et l'isopropanol), les cétones (par exemple la diméthylcétone et la méthylisobutyl cétone), les esters (par exemple l'acétate de n-butyle) et les éthers (par exemple le méthyltertiobutyl éther).

Les émulseurs anti-incendies sont des compositions liquides destinées à combattre les feux de liquides combustibles (hydrocarbures et/ou liquides polaires). Au moment de l'utilisation, les émulseurs sont dilués dans l'eau de ville ou l'eau de mer, généralement à une concentration en volume de 3 % (c'est à dire 3 volumes d'émulseur pour 97 volumes d'eau) ou 6 % (6 volumes d'émulseur pour 94 volumes d'eau) mais aussi, et plus rarement, 1 % (1 volume d'émulseur pour 99 volumes d'eau). Après dilution des émulseurs, la quantité de matières actives nécessaire pour satisfaire aux performances extinctrices minimales requises étant identique dans tous les cas de dilution, les émulseurs diluables à 3 % sont donc deux fois plus concentrés que ceux diluables à 6 %; ils permettent aux utilisateurs de stocker des quantités moindres d'émulseur, de gagner de la place et de réduire leurs frais de stockage. La solution moussante est obtenue par dilution à l'eau de l'émulseur. Cette solution moussante passe au travers d'une lance anti-incendies où se produit une agitation mécanique avec incorporation d'air, ce qui génère une mousse extinctrice utilisée pour combattre les feux de liquides combustibles.

Lorsque les polymères selon l'invention sont intégrés dans les émulseurs, ils améliorent la stabilité des mousses extinctrices sur liquide polaire et donc leur performance extinctrice sur ces types de feux. Leur teneur dans les émulseurs peut aller généralement de 0,1 à 10 % en poids et de préférence de 0,2 à 5 % en poids.

Les émulseurs dans lesquels les polymères hydrophiles fluorés peuvent être incorporés sont de deux types, en fonction de l'origine de leur base moussante. On distingue les émulseurs synthétiques dont la base moussante est constituée d'au moins un agent tensioactif hydrocarboné et les émulseurs protéiniques dont la base moussante est constituée d'un hydrolysat de protéines animales. Ces deux types d'émulseurs peuvent contenir, selon leur destination un ou plusieurs agents tensioactifs fluorés, un ou plusieurs co-solvants stabilisateurs de mousse, un polymère hydrophile à haut poids moléculaire du type polysaccharide à caractère thixotrope et alcoophobe, un agent antigel, un agent anticorrosion, un conservateur, un stabilisateur de pH, des sels minéraux dont le cation est divalent comme, par exemple, l'ion magnésium ou l'ion calcium.

Les émulseurs anti-incendies polyvalents contenant un polymère hydrophile selon l'invention sont utilisés pour combattre les feux d'hydrocarbures et de liquides polaires. Leurs performances peuvent être évaluées au moyen des tests suivants :

### Foisonnement

Le foisonnement (ou taux d'expansion) est le rapport du volume de mousse produit à partir d'une solution aqueuse à 3 ou 6 % d'émulseur au volume de liquide initial. Pour déterminer le foisonnement, on introduit dans une éprouvette de 1 litre 100 ml de solution aqueuse à 3 ou 6 % d'émulseur, puis la solution est battue pendant une minute au rythme d'un battement par seconde à l'aide d'un piston circulaire perforé (30 trous de 5 mm de diamètre représentant 25 % de la surface) et fixé en son centre à une tige métallique. On mesure le volume en millilitres de mousse obtenu et, en divisant par 100, on obtient la valeur du foisonnement.

### Stabilité de la mousse sur liquide polaire

On verse 100 ml d'acétone dans un cristallisoir de diamètre intérieur 11,8 cm. D'autre part, on dilue l'émulseur à 3 ou 6 % dans l'eau de ville et on produit la mousse à l'aide d'un batteur électrique pendant 2 minutes. On verse 10 ± 2 g de mousse sur l'acétone et déclenche le chronomètre. On note le temps de disparition totale de la mousse. Les émulseurs les plus performants sur liquide polaire sont ceux pour lesquels le temps de disparition totale de la mousse est le plus long possible.

### Efficacité extinctrice sur liquide polaire

On verse 150 ml d'acétone dans un récipient métallique circulaire de 12 cm de diamètre intérieur. D'autre part, on prépare une solution aqueuse composée de l'émulseur dilué à 3 ou 6 % dans l'eau de ville. On dispose d'un agitateur rotatif composé d'un moteur et d'une tige métallique à l'extrémité de laquelle sont fixées des pales qui produisent une action mécanique lorsque la tige est en rotation; la vitesse de rotation est réglable de 0 à 2800 t/min. La tige est introduite au fond d'un récipient cylindrique muni d'un orifice d'entrée situé au fond et d'un orifice de sortie situé au sommet. Une pompe doseuse transvase par l'orifice d'entrée la solution aqueuse au fond du récipient cylindrique; au contact des pales en rotation il se produit de la mousse qui s'évacue, au fur et à mesure de sa formation, par l'orifice de sortie. Le débit de la pompe et la vitesse de rotation de la tige sont réglés de telle sorte que l'on produise de la mousse en continu avec un débit fixe de mousse égal à 36±2 g/min, (sauf indication contraire).

Lorsque le débit de mousse est stabilisé, on enflamme l'acétone. Après combustion de l'acétone pendant 90 secondes, on déverse la mousse à l'intérieur du récipient métallique par un point unique situé sur la circonférence. Lorsque l'acétone est éteinte complètement, on note le temps d'extinction. La quantité de mousse déversée pour éteindre le foyer est calculé en multipliant le temps par le débit. Les émulseurs les plus performants sur liquide polaire sont ceux pour lesquels la quantité de mousse déversée est la plus faible possible.

### EXEMPLES

Dans les exemples suivants qui illustrent l'invention sans la limiter, les pourcentages indiqués sont exprimés en poids et certains constituants utilisés sont désignés, pour simplifier, par les abréviations suivantes:
**A1** = acrylate de 2-(perfluorooctyl)éthyle de formule :

CH₂=CH―COO―C₂H₄―(CF₂)₇CF₃

**A2** = mélange d'acrylates de 2-(perfluoroalkyl)éthyle de formule :

CH₂=CH―COO―C₂H₄―(CF₂)ₙCF₃

ayant la composition pondérale suivante :

| **n** | **%** |
|---|---|
| 5 | 1 |
| 7 | 63 |
| 9 | 25 |
| 11 | 9 |
| 13 | 3 |

**A3** = mélange de méthacrylates de 2-(perfluoroalkyl)éthyle de formule :

CH₂=C(CH₃)―COO―C₂H₄―(CF₂)ₙCF₃

ayant la même composition pondérale que A₂
**B1** = acide acrylique de formule :

CH₂=CH―COOH

**B2** = chlorure de N-[2-(acryloyloxy)éthyl]-N,N,N-triméthylammonium de formule :

CH₂ = CH―COO―C₂H₄―N^{⊕} (CH₃)₃, Cl⁻

**C1** = solution hydroalcoolique à 27 % de la bétaïne fluorée de formule :

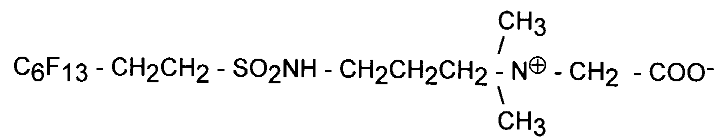

### EXEMPLE 1

### a) Synthèse :

Dans un réacteur de 1 litre équipé d'un thermomètre, d'un réfrigérant à reflux, d'une arrivée d'azote et d'un agitateur mécanique, on dissout 13,9 g (0,196 mole) d'acrylamide, 3,53 g (0,049 mole) de B1 et 2,96 g (0,005 mole) de mélange A3 dans 210 ml d'isopropanol. On met en route l'agitation, puis on porte le milieu réactionnel à la température de 80°C, sous circulation d'azote. On introduit dans le réacteur une solution de 0,41 g (0,0025 mole) d'azo-bis-isobutyronitrile dans 20 ml d'isopropanol. Un précipité blanc se forme rapidement et le milieu réactionnel est maintenu à 80°C pendant 90 minutes. On introduit à nouveau dans le réacteur une solution de 0,41 g (0,0025 mole) d'azo-bis-isobutyronitrile dans 20 ml d'isopropanol. Le milieu réactionnel est encore maintenu à 80°C pendant 30 minutes. Après refroidissement à température ambiante, le polymère est récupéré par filtration, lavé successivement à l'isopropanol et à l'acétone, puis séché. Le taux de fluor mesuré expérimentalement par minéralisation sur le produit obtenu est de 7,4 %.

### b) Evaluation en émulseur anti-incendies synthétique :

A 50 g d'une solution aqueuse à 1 % de polysaccharide, préparée par addition dans l'eau à température ambiante du polysaccharide Actigum CX9YL1 de la société System Bio-lndustries sous forme de poudre sous forte agitation, on ajoute à température ambiante sous agitation modérée 0,68 g du polymère hydrophile fluoré préparé ci-dessus, 15 g de butyl diglycol et 5 g de solution C1. Puis on complète à 100 g par addition d'eau. On obtient un émulseur anti-incendies que l'on dilue à 3 % avec de l'eau de ville. La solution résultante, soumise aux tests décrits précédemment, présente les caractéristiques suivantes :

| | |
|---|---|
| Foisonnement | 6,7 |
| Stabilité de la mousse sur acétone | 210 secondes |
| Efficacité extinctrice sur acétone | |
| Temps d'extinction | 182 secondes |
| Masse de mousse déversée | 109 grammes |

### c) Evaluation en émulseur anti-incendies protéinique :

A 94 g d'un hydrolysat de protéines à 35 % d'extrait sec on ajoute à température ambiante et sous agitation modérée 2 g du polymère hydrophile fluoré préparé ci-dessus et 4 g de solution C1. On obtient un émulseur anti-incendies protéinique que l'on dilue à 6 % avec de l'eau de ville. La solution résultante, soumise aux tests décrits précédemment, présente les caractéristiques suivantes :

| | |
|---|---|
| Foisonnement | 9 |
| Stabilité de la mousse sur acétone | 870 secondes |
| Efficacité extinctrice sur acétone | |
| Temps d'extinction | 58 secondes |
| Masse de mousse déversée | 35 grammes |

### EXEMPLE 2

### a) Synthèse :

Dans un réacteur de 1 litre équipé d'un thermomètre, d'un réfrigérant à reflux, d'une arrivée d'azote et d'un agitateur mécanique, on dissout 17,4 g (0,245 mole) d'acrylamide et 2,96 g (0,005 mole) de mélange A3 dans 230 ml d'isopropanol. On met en route l'agitation puis on porte le milieu réactionnel à la température de 80°C, sous circulation d'azote. On introduit dans le réacteur une solution de 0,41 g (0,0025 mole) d'azo-bis-isobutyronitrile dans 20 ml d'isopropanol. Un précipité blanc se forme rapidement et le milieu réactionnel est maintenu à 75°C pendant 45 minutes. Après refroidissement à température ambiante, le polymère est récupéré par filtration, lavé successivement à l'isopropanol et à l'acétone, puis séché. L'analyse en RMN du proton sur le produit obtenu révèle un taux d'insaturations inférieur à 0,5 % de doubles liaisons non réagis. Le taux de fluor mesuré expérimentalement est de 4,4 %.

### b) Evaluation en émulseur anti-incendies synthétique :

On procède comme à l'exemple 1 (paragraphe b), mais on remplace le polymère hydrophile fluoré de l'exemple 1 par 1,14g du polymère hydrophile fluoré préparé ci-dessus. On obtient un émulseur anti-incendies que l'on dilue à 3 % avec de l'eau de ville. La solution résultante, soumise aux tests décrits précédemment, présente les caractéristiques suivantes :

| | |
|---|---|
| Foisonnement | 6,3 |
| Stabilité de la mousse sur acétone | 80 secondes |
| Efficacité extinctrice sur acétone | |
| Temps d'extinction | 158 secondes |
| Masse de mousse déversée | 95 grammes |

### c) Evaluation en émulseur anti-incendies protéinique :

A 92,6 g d'un hydrolysat de protéines à 35 % d'extrait sec on ajoute à température ambiante et sous agitation modérée 3,4 g du polymère hydrophile fluoré préparé ci-dessus et 4 g de solution C1. On obtient un émulseur anti-incendies protéinique que l'on dilue à 6% avec de l'eau de ville. La solution résultante, soumise aux tests décrits précédemment, présente les caractéristiques suivantes :

| | |
|---|---|
| Foisonnement | 8 |
| Stabilité de la mousse sur acétone | 720 secondes |
| Efficacité extinctrice sur acétone | |
| Temps d'extinction | 70 secondes |
| Masse de mousse déversée | 42 grammes |

### EXEMPLE 3

### a) Synthèse :

On procède comme à l'exemple 2 (paragraphe a), mais on remplace le mélange A3 par 2,87 g (0,005 mole) de mélange A2 et l'isopropanol par le même volume d'éthanol. L'analyse en RMN du proton sur le produit obtenu révèle un taux d'insaturations inférieur à 0,5 % de doubles liaisons non réagis. Le taux de fluor mesuré expérimentalement est de 3,5 %.

### b) Evaluation en émulseur anti-incendies synthétique :

On procède comme à l'exemple 1 (paragraphe b), mais on remplace le polymère hydrophile fluoré de l'exemple 1 par 1,43g du polymère hydrophile fluoré préparé ci-dessus. On obtient un émulseur anti-incendies que l'on dilue à 3 % avec de l'eau de ville. La solution résultante, soumise aux tests décrits précédemment, présente les caractéristiques suivantes :

| | |
|---|---|
| Foisonnement | 5,9 |
| Stabilité de la mousse sur acétone | 157 secondes |
| Efficacité extinctrice sur acétone | |
| Temps d'extinction | 186 secondes |
| Masse de mousse déversée | 112 grammes |

### EXEMPLE 4

### a) Synthèse :

Dans un réacteur de 1 litre équipé d'un thermomètre, d'un réfrigérant à reflux, d'une arrivée d'azote et d'un agitateur mécanique, on dissout 21,3 g (0,3 mole) d'acrylamide, 5 g (0,01 mole) de A1, 1,8 g (0,025 mole) de B1 et 3,9 g (0,02 mole) de B2 dans 190 ml d'isopropanol. On met en route l'agitation puis on porte le milieu réactionnel à la température de 75°C, sous circulation d'azote. On introduit dans le réacteur une solution de 0,41 g (0,0025 mole) d'azo-bis-isobutyronitrile dans 30 ml d'isopropanol. Un précipité blanc se forme rapidement et le milieu réactionnel est maintenu à la température de reflux de l'isopropanol, pendant une heure. On introduit à nouveau dans le réacteur une solution de 0,41 g (0,0025 mole) d'azo-bis-isobutyronitrile dans 30 ml d'isopropanol. Le milieu réactionnel est encore maintenu à la température de reflux de l'isopropanol pendant 4 heures. Après refroidissement à température ambiante, le polymère est récupéré par filtration, lavé successivement à l'isopropanol et à l'acétone puis séché. Le taux de fluor mesuré expérimentalement sur le produit obtenu est de 7,2 %.

### b) Evaluation en émulseur anti-incendies synthétique :

On procède comme à l'exemple 1 (paragraphe b), mais on remplace le polymère hydrophile fluoré de l'exemple 1 par 0,49g du polymère hydrophile fluoré préparé ci-dessus. On obtient un émulseur anti-incendies que l'on dilue à 3 % avec de l'eau de ville. La solution résultante, soumise aux tests décrits précédemment, présente les caractéristiques suivantes :

| | |
|---|---|
| Foisonnement | 5,9 |
| Stabilité de la mousse sur acétone | 27 secondes |
| Efficacité extinctrice sur acétone | |
| Temps d'extinction | 240 secondes |
| Masse de mousse déversée | 144 grammes |

### EXEMPLE 5

### a) Synthèse :

Dans un réacteur de 1 litre équipé d'un thermomètre, d'un réfrigérant à reflux, d'une arrivée d'azote et d'un agitateur mécanique, on dissout 21,3g (0,3 mole) d'acrylamide, 5 g (0,01 mole) de A1 et 3,6 g (0,05 mole) de B1 dans 190 ml d'éthanol. On met en route l'agitation puis on porte le milieu réactionnel à la température de 75°C, sous circulation d'azote. On introduit dans le réacteur une solution de 0,41 g (0,0025 mole) d'azo-bis-isobutyronitrile dans 30 ml d'éthanol. Un précipité blanc se forme rapidement et le milieu réactionnel est maintenu à la température de reflux de l'éthanol, pendant une heure. On introduit à nouveau dans le réacteur une solution de 0,41 g (0,0025 mole) d'azo-bis-isobutyronitrile dans 30 ml d'éthanol. Le milieu réactionnel est encore maintenu à la température de reflux de l'éthanol pendant 4 heures. Après refroidissement à température ambiante, le polymère est récupéré par filtration, lavé successivement à l'éthanol et à l'acétone puis séché. Le taux de fluor mesuré expérimentalement sur le produit obtenu est de 7,6 %.

### b) Evaluation en émulseur anti-incendies synthétique :

On procède comme à l'exemple 1 (paragraphe b), mais on remplace le polymère hydrophile fluoré de l'exemple 1 par 2 g du polymère hydrophile fluoré préparé ci-dessus. On obtient un émulseur anti-incendies que l'on dilue à 3 % avec de l'eau de ville. La solution résultante, soumise aux tests décrits précédemment, présente les caractéristiques suivantes :

| | |
|---|---|
| Foisonnement | 7,3 |
| Stabilité de la mousse sur acétone | 480 secondes |
| Efficacité extinctrice sur acétone | |
| Temps d'extinction | 72 secondes |
| Masse de mousse déversée | 43 grammes |

### c) Evaluation en émulseur anti-incendies protéinique :

A 88,4 g d'un hydrolysat de protéines à 44 % d'extrait sec on ajoute à température ambiante et sous agitation modérée 3,6 g du polymère hydrophile fluoré préparé ci-dessus et 8 g de solution C1. On obtient un émulseur anti-incendies protéinique que l'on dilue à 3% avec de l'eau de ville. La solution résultante, soumise aux tests décrits précédemment, présente les caractéristiques suivantes :

| | |
|---|---|
| Foisonnement | 7,7 |
| Stabilité de la mousse sur acétone | 780 secondes |
| Efficacité extinctrice sur acétone | |
| Temps d'extinction | 57 secondes |
| Masse de mousse déversée | 34 grammes |

### EXEMPLES 6 à 10

En procédant comme à l'exemple 4 (paragraphe a) avec le solvant de synthèse et la composition de monomères indiqués dans le tableau ci-après, on a synthétisé d'autres polymères hydrophiles fluorés selon l'invention. Le solvant utilisé pour laver le polymère obtenu est de même nature que le solvant de synthèse.

| **Exemple** | **Solvant de synthèse** | **Acrylamide** | **Monomère fluoré** | **Autre monomère** |
|---|---|---|---|---|
| 6 | Isopropanol | 21,3g (0,3 mole) | A1: 5g (0,01 mole) | B2: 7,8g (0,04 mole) |
| 7 | Ethanol | 25g (0,35 mole) | A1: 5g (0,01 mole) | - |
| 8 | Ethanol | 21,3g (0,3 mole) | A2: 4,88g (0,0086 mole) | B1: 3,6g (0,05 mole) |
| 9 | Isopropanol | 21,3g (0,3 mole) | A3: 5g (0,0086 mole) | B1: 3,6g (0,05 mole) |
| 10 | Isopropanol | 21,3g (0,3 mole) | A2: 4,88g (0,0086 mole) | B1: 3,6g (0,05 mole) |

La mise en oeuvre du test d'efficacité extinctrice sur acétone donne lieu, pour les polymères ainsi obtenus, à une masse de mousse déversée inférieure à 150 grammes.

### EXEMPLE 11 (comparatif)

On prépare un émulseur anti-incendies en procédant comme à l'exemple 1 (paragraphe b), mais sans incorporer de polymère hydrophile fluoré selon l'invention. On obtient un émulseur anti-incendies que l'on dilue à 3 % avec de l'eau de ville. La solution résultante, soumise aux tests décrits précédemment, présente les caractéristiques suivantes :

| | |
|---|---|
| Foisonnement | 6,2 |
| Stabilité de la mousse sur acétone | < 20 secondes |
| Efficacité extinctrice sur acétone | |
| Temps d'extinction | 266 secondes |
| Masse de mousse déversée | 160 grammes |

### EXEMPLE 12 (comparatif)

Dans un réacteur de 1 litre équipé d'un thermomètre, d'un réfrigérant à reflux, d'une arrivée d'azote et d'un agitateur mécanique, on dissout 17,2 g (0,243 mole) d'acrylamide et 1,35 g (0,007 mole) de B2 dans 210 ml d'isopropanol. On met en route l'agitation puis on porte le milieu réactionnel à la température de 78°C, sous circulation d'azote. On introduit dans le réacteur une solution de 0,41 g (0,0025 mole) d'azo-bis-isobutyronitrile dans 20 ml d'isopropanol. Un précipité blanc se forme rapidement et le milieu réactionnel est maintenu à 78°C pendant 30 minutes. Après refroidissement à température ambiante, le polymère est récupéré par filtration, lavé successivement à l'isopropanol et à l'acétone, puis séché.

### EXEMPLE 13 (comparatif)

Dans un réacteur de 1 litre équipé d'un thermomètre, d'un réfrigérant à reflux, d'une arrivée d'azote et d'un agitateur mécanique, on dissout 34,4 g (0,48 mole) d'acrylamide et 2,9 g (0,015 mole) de B2 dans 420 ml d'acétonitrile. On met en route l'agitation puis on porte le milieu réactionnel à la température de 78°C, sous circulation d'azote. On introduit dans le réacteur une solution de 0,82 g (0,005 mole) d'azo-bis-isobutyronitrile dans 40 ml d'acétonitrile. Un précipité blanc se forme rapidement et le milieu réactionnel est maintenu à 80°C pendant 30 minutes. Après refroidissement à température ambiante, le polymère est récupéré par filtration, lavé successivement à l'acétonitrile et à l'acétone, puis séché.

La tension superficielle et le pouvoir moussant de solutions aqueuses contenant les polymères non fluorés préparés aux exemples 12 et 13 ont été comparés à ceux des polymères selon l'invention. Pour cela, on a préparé des solutions à 1 g/litre des différents polymères hydrophiles dans l'eau déminéralisée, puis sur chaque solution on a mesuré à 20°C la tension superficielle par étirement de film à l'aide d'un étrier en platine et le pouvoir moussant selon la méthode de Ross-Miles (observation du volume de mousse après 30 secondes) dont le principe est décrit dans la norme internationale ISO 696. Les résultats obtenus sont rassemblés dans le tableau suivant :

| **Polymère de l'exemple n°** | **Taux de fluor du polymère (%)** | **Tension superficielle (mN/m)** | **Pouvoir moussant (ml)** |
|---|---|---|---|
| Néant | - | 72,5 | pas de mousse |
| 3 | 3,5 | 52,0 | 210 |
| 8 | 7,1 | 53,0 | 200 |
| 10 | 7,1 | 41,7 | 220 |
| 12 Comp. | 0 | 72,5 | pas de mousse |
| 13 Comp. | 0 | 62,0 | pas de mousse |

Contrairement aux polymères hydrophiles fluorés selon l'invention, les polymères non fluorés des exemples comparatifs 12 et 13 n'ont aucune propriété moussante. D'autre part, l'abaissement de la tension superficielle obtenu avec les polymères fluorés selon l'invention est plus importante que dans le cas des polymères des exemples comparatifs 12 et 13.

### EXEMPLE 14

### a) Synthèse :

Dans un réacteur de 2 litres, équipé d'un thermomètre, d'un réfrigérant à reflux, d'une arrivée d'azote et d'un agitateur mécanique, on dissout 97,2 g (1,37 mole) d'acrylamide, 36 g (0,06 mole) de A3, 26,4 g (0,37 mole) de B1 et 1,9 g (0,01 mole) de B2 dans 1400 ml d'isopropanol. On met en route l'agitation puis on porte le milieu réactionnel à la température de 75°C, sous circulation d'azote. On prépare une solution comprenant 6 g (0,037 mole) d'azo-bis-isobutyronitrile dans 200 ml d'isopropanol. On verse cette solution dans le réacteur. Un précipité blanc se forme rapidement et le milieu réactionnel est maintenu à la température de reflux de l'isopropanol, pendant une heure. On prépare une solution comprenant 3g (0,018 mole) d'azo-bis-isobutyronitrile dans 200 ml d'isopropanol. On verse cette solution dans le réacteur. Le milieu réactionnel est encore maintenu à la température de reflux de l'isopropanol pendant 4 heures. Après refroidissement à température ambiante, le polymère est récupéré par filtration, lavé successivement à l'isopropanol et à l'acétone puis séché. Le taux de fluor mesuré expérimentalement sur le produit obtenu est de 12 %.

### b) Evaluation en émulseur anti-incendies protéinique :

A température ambiante et sous agitation modérée on mélange 4 g de la solution C1, 7 g d'éthylène glycol, 0,5 g de polysaccharide Actigum CX9YL1 de la société System Bio-lndustries sous forme de poudre, 7 g d'eau déminéralisée, 0,25 g de formaldéhyde, 0,25 g du polymère hydrophile fluoré préparé ci-dessus, puis on complète à 100 g par addition d'un hydrolysat de protéines animales à 35 % d'extrait sec. On obtient un émulseur anti-incendies protéinique que l'on dilue à 6 % avec de l'eau de ville. La solution résultante, soumise aux tests décrits précédemment, présente les caractéristiques suivantes :

| | |
|---|---|
| Foisonnement | 7,5 |
| Efficacité extinctrice sur acétone | |
| Temps d'extinction | 70 secondes |
| Débit de mousse | 40 g/min |
| Masse de mousse déversée | 47 grammes |

### EXEMPLE 15 (comparatif)

On prépare un émulseur anti-incendies protéinique en procédant comme à l'exemple 14 (paragraphe b), mais sans incorporer de polymère hydrophile fluoré selon l'invention. On obtient un émulseur anti-incendies que l'on dilue à 6 % avec de l'eau de ville. La solution résultante, soumise aux tests décrits précédemment, présente les caractéristiques suivantes :

| | |
|---|---|
| Foisonnement | 7,1 |
| Efficacité extinctrice sur acétone | |
| Temps d'extinction | 176 secondes |
| Débit de mousse | 40 g/min |
| Masse de mousse déversée | 117 grammes |

### EXEMPLE 16

Dans un réacteur de 1 litre, équipé d'un thermomètre, d'un réfrigérant à reflux, d'une arrivée d'azote et d'un agitateur mécanique, on incorpore 225 ml d'isopropanol. On met en route l'agitation puis on porte le milieu réactionnel à la température de 80°C, sous circulation d'azote. D'autre part, on prépare les deux solutions suivantes :
*Solution S1* :
   - 27 g (0,38 mole) d'acrylamide
   - 10 g (0,017 mole) de A3
   - 7,4 g (0,103 mole) de B1
   - 0,54 g (0,003 mole) de B2
   - 195 g (250 ml) d'isopropanol
*Solution S2* :
   - 2,5 g (0,015 mole) d'azo-bis-isobutyronitrile
   - 25 g de N-méthylpyrrolidone
   - 19,5 g (25 ml) d'isopropanol

On coule simultanément S1 en 1h et S2 en 1h30 min. Un précipité blanc se forme rapidement et le milieu réactionnel est maintenu à la température de reflux de l'isopropanol, pendant deux heures. Après refroidissement à température ambiante, le polymère est récupéré par filtration, lavé successivement à l'isopropanol et à l'acétone puis séché. Le taux de fluor mesuré expérimentalement sur le produit obtenu est de 11 %.

### EXEMPLE 17

On procède comme à l'exemple 16, avec des compositions identiques, mais on coule simultanément S1 en 4h et S2 en 4h30 min. Le taux de fluor mesuré expérimentalement sur le produit obtenu est de 10 %.

### EXEMPLE 18

On procède comme à l'exemple 16, mais les compositions des solutions sont les suivantes :
*Solution S1* :
   - 30 g (0,42 mole) d'acrylamide
   - 6,8 g (0,06 mole) d'hydroxyéthyl acrylate de formule :

      CH₂ = CH―COO―C₂H₄―OH
   - 10 g (0,017 mole) de A3
   - 2,4 g (0,012 mole) de B2
   - 195 g (250 ml) d'isopropanol
*Solution S2* :
   - 2,5 g (0,015 mole) d'azo-bis-isobutyronitrile
   - 25 g de N-méthylpyrrolidone
   - 19,5 g (25 ml) d'isopropanol

On coule simultanément S1 en 3h et S2 en 3h30 min.

### EXEMPLE 19

On procède comme à l'exemple 16, mais les compositions des solutions sont les suivantes :
*Solution S1* :
   - 23 g (0,32 mole) d'acrylamide
   - 10 g (0,017 mole) de A3
   - 7,4 g (0,103 mole) de B1
   - 1,2 g (0,006 mole) de B2
   - 6,8 g (0,06 mole) de l'hydroxyéthyl acrylate de l'exemple 18
   - 195 g (250 ml) d'isopropanol
*Solution S2* :
   - 2,5 g (0,015 mole) d'azo-bis-isobutyronitrile
   - 25 g de N-méthylpyrrolidone
   - 19,5 g (25 ml) d'isopropanol

On coule simultanément S1 en 3h et S2 en 3h30 min.

### EXEMPLES 20 A 23

On prépare une série d'émulseurs anti-incendies synthétiques en procédant, pour chacun d'eux de la manière suivante :
A 50 g d'une solution aqueuse à 1 % de polysaccharide, préparée par addition dans l'eau à température ambiante de polysaccharide Actigum CX9YL1 de la société System Bio-lndustries sous forme de poudre sous forte agitation, on ajoute à température ambiante sous agitation modérée 0,61 g de l'un des polymères hydrophiles fluorés préparés ci-dessus, 15 g de butyl diglycol et 5 g de solution C1.
Puis on complète à 100 g par addition d'eau. On obtient une série d'émulseurs anti-incendies que l'on dilue à 3 % avec l'eau de la ville. Les solutions résultantes, sont soumises aux tests décrits précédemment, elles présentent les caractéristiques rassemblées dans le tableau suivant :

| **Exemple** | **Polymère de l'exemple** | **Foisonnement** | **Efficacité extinctrice sur acétone** ^{**(a)**} | |
|---|---|---|---|---|
| | | | *Temps d'extinction* | *Masse de mousse déversée* |
| 20 | 16 | 6,0 | 161 secondes | 107 g |
| 21 | 17 | 6,2 | 159 secondes | 106 g |
| 22 | 18 | 6,0 | 157 secondes | 105 g |
| 23 | 19 | 6,0 | 159 secondes | 106 g |

| | | | | |
|---|---|---|---|---|
| ***(a)*** *Pour le test d'efficacité extinctrice sur acétone, débit de la mousse fixé à 40 g/min* | | | | |

### REFERENCES

[1] A. Hill, F. CANDAU etJ. Selb - *Macromolécules (1993), 26, p.4521.*
[2] C.L. McCormick, T. Nonaka et C.B. Johnson - *Polymer (1988), 29, p. 731.*
[3] K.C. Dowling et J.K. Thomas - *Macromolécules (1990), 23, p.1059.*
[4] Y.X. Zhang, A.H. Da, T.E. Hogen-Esch et G.B. Butler - *ACS* - *Symp. Ser. (1991), 467, p.159.*
[5] Y.X. Zhang, A.H. Da, T.E. Hogen-Esch - *Journal or Polymer Science; Part C: Polymer Letters (1990), vol. 28, p.213.*
[6] F.S. Hwang et T.E. Hogen-Esch - *Polymer Preprints (1993), 34 (1), p.405.*
[7] T.E. Hogen-Esch, M. Yassini, Y.-X. Zhang, F. Huang, E.J. Amis et T. Seery - *Polymer Preprints (1990), 31 (2), p.460.*
[8] Y.X. Zhang, A.H. Da, T.E. Hogen-Esch et G.B. Butler *-Journal or Polymer Science; Part A: Polymer Chemistry (1992), vol. 30, p.1383.*
[9] X. Xie et T.E. Hogen-Esch - Macromolecules *(1996), 29, p.1734.*
[10] M. Yassini et T.E. Hogen-Esch - *Polymer Preprints (1994), 35 (1), p.478.*
[11] Y.X. Zhang, A.H. Da et T.E. Hogen-Esch - *Polymer Preprints (1989), 30 (2), p.338.*
[12] F.A. Abdel-Mohdy, A. waly, A. Higazy et A. Hebeish - *Pigment & Resein Technology (1994), 23 (2), p.10.*
[13] J.M. Bessiere, B. Boutevin, O. Loubet - *Polymer Bulletin* (1993), *30, p.545.*
[14] H. Sawada - *Review on Heteroatom Chemistry (1993), 8, p.205.*
[15] H. Sawada, Y. Minoshima, T. Hiromitsu - *Journal of Fluorine Chemistry (1993), 65 (1-2), p.169.*

## Revendications

1. Polymère hydrophile fluoré obtenu par polymérisation radicalaire, en milieu précipitant, d'un mélange de monomères composé en poids de :
**(a)** 50 à 98 % d'au moins un monomère hydrophile non-ionique ;
**(b)** 2 à 25 % d'au moins un monomère comprenant un radical perfluoroalkyle, linéaire ou ramifié, contenant de 2 à 20 atomes de carbone ; et
**(c)** 0 à 30 % d'un ou plusieurs monomère(s) hydrophile(s) ionique(s) ou ionisable(s).

2. Polymère hydrophile fluoré selon la revendication 1, dans lequel on choisit le ou les monomère(s) hydrophile(s) non-ionique(s) parmi :
- les acrylates ou méthacrylates de polyéthylèneglycol ou d'éther de polyéthylèneglycol répondant à la formule générale :
CH₂ = CR¹-CO(OCH₂CH₂)ₖ-OR (I)
dans laquelle R représente un atome d'hydrogène ou un radical méthyle ou éthyle, k est un nombre entier allant de 1 à 10 et R¹ représente un atome d'hydrogène ou un radical méthyle ;
- l'acrylamide, le méthacrylamide et leurs dérivés N-substitués de formule générale suivante :
CH₂ = CR¹―CONR²R³ (II)
dans laquelle R¹ représente un atome d'hydrogène ou un radical méthyle, les symboles R² et R³, identiques ou différents, représentent chacun un atome d'hydrogène ou un radical alkyle ou hydroxyalkyle contenant de 1 à 3 atomes de carbone

3. Polymère hydrophile fluoré selon la revendication 1 ou 2, dans lequel le ou les monomères fluorés (b) sont des monomères acryliques ou méthacryliques répondant à la formule générale suivante : 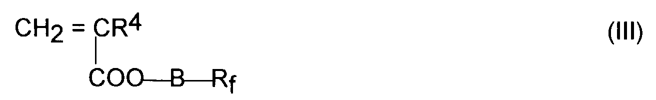 dans laquelle R_{f} représente un radical perfluoroalkyle, linéaire ou ramifié, contenant de 2 à 20, de préférence de 4 à 16 atomes de carbone, B représente un enchaînement bivalent lié à O par un atome de carbone et pouvant comporter un ou plusieurs atomes d'oxygène, de soufre et/ou d'azote et R⁴ représente un atome d'hydrogène ou un radical méthyle.

4. Polymère hydrophile fluoré selon la revendication 3, dans lequel B est un radical divalent CH₂CH₂ ou CH₂CH₂NR⁵SO₂CH₂CH₂ dans lequel R⁵ représente un atome d'hydrogène ou un radical méthyle ou éthyle.

5. Polymère hydrophile fluoré selon l'une des revendications 2 à 4, préparé par polymérisation radicalaire en milieu précipitant dans l'acétonitrile ou dans un alcool contenant de 1 à 4 atomes de carbone.

6. Polymère hydrophile fluoré selon la revendication 5, préparé par polymérisation radicalaire en milieu précipitant dans l'éthanol ou l'isopropanol.

7. Polymère hydrophile fluoré selon l'une des revendications 1 à 6, préparé à partir d'un mélange de monomères composé en poids de 70 à 93 % de monomères (a), de 5 à 20 % de monomères (b) et de 2 à 25 % de monomères (c).

8. Polymère hydrophile fluoré selon la revendication 7, préparé à partir d'un mélange de monomères composé en poids de 75 à 88 % de monomères (a), de 7 à 15 % de monomères (b) et de 5 à 15 % de monomères (c).

9. Polymère hydrophile fluoré selon l'une des revendications 1 à 8, dont le taux de fluor est compris en poids entre 1 et 15 %, de préférence entre 2 et 10 %, et plus particulièrement entre 3 et 8 %.

10. Polymère hydrophile fluoré selon l'une des revendications 1 à 9, préparé par polymérisation radicalaire avec une concentration en amorceur comprise entre 0,1 et 10 % molaire (de préférence entre 0,6 et 2 % molaire) par rapport au nombre total de moles de monomères (a), (b) et éventuellement (c).

11. Utilisation d'un polymère hydrophile fluoré selon l'une des revendications 1 à 10 dans un émulseur anti-incendies polyvalent.

12. Emulseur anti-incendies polyvalent comprenant en poids de 0,1 à 10 %, de préférence de 0,2 à 5 %, d'un polymère hydrophile fluoré selon l'une des revendications 1 à 10.
